Europäisches Patentamt

European Patent Office

Office européen des brevets

(11) Veröffentlichungsnummer: **0 492 107 A2**

# EUROPÄISCHE PATENTANMELDUNG

(21) Anmeldenummer: **91119209.4**

(22) Anmeldetag: **12.11.91**

(51) Int. Cl.5: **F16F 9/46**, F16F 9/34

(30) Priorität: **22.12.90 DE 4041619**

(43) Veröffentlichungstag der Anmeldung:
**01.07.92 Patentblatt 92/27**

(84) Benannte Vertragsstaaten:
**DE ES FR GB**

(71) Anmelder: **ROBERT BOSCH GMBH**
**Postfach 30 02 20**
**W-7000 Stuttgart 30(DE)**

(72) Erfinder: **Engelsdorf, Kurt, Dr.-Ing.**
**Schulstrasse 1/1**
**W-7122 Besigheim 3(DE)**
Erfinder: **Scheffel, Martin**
**Sudetenstrasse 70**
**W-7143 Vaihingen-Enzweihingen(DE)**
Erfinder: **Weisser, Roland, Dipl.-Ing. (FH)**
**Hauptstrasse 14**
**W-7731 Unterkirnach(DE)**

(54) **Steuerschieber.**

(57) Bei bisher bekannten Stoßdämpfern kann ein Drosselquerschnitt mit Hilfe eines Steuerschiebers gesteuert werden. Wegen nie ganz zu vermeidender Strömungskräfte muß die Magnetkraft in Abhängigkeit des durchströmenden Druckmediumstromes gesteuert werden.

Bei dem hier vorgeschlagenen Zylinder mit einem Steuerschieber (20) ergibt sich eine auf den Steuerschieber (20) wirkende Zusatzkraft, welche der Strömungskraft entgegengerichtet ist und diese zumindest teilweise kompensieren kann.

Der vorgeschlagene Zylinder soll insbesondere als Stoßdämpfer für Fahrzeuge verwendet werden.

FIG.1

EP 0 492 107 A2

## Stand der Technik

Die Erfindung geht aus von einem Zylinder nach der Gattung des Hauptanspruchs.

Es ist bereits ein Zylinder mit zwei Arbeitsräumen und einer die beiden Arbeitsräume verbindenden Strömungsverbindung bekannt. Im Verlauf der Strömungsverbindung befindet sich ein Drosselquerschnitt, dessen freie Drosselquerschnittsfläche mit Hilfe eines elektromagnetisch betätigbaren Steuerschiebers veränderbar ist.

Befindet sich der Steuerschieber z. B. in einer in etwa mittleren Position und verändert sich hierbei die Menge des pro Zeiteinheit durchströmenden Druckmediums, so verändert sich hierbei auch eine auf den Steuerschieber einwirkende Strömungskraft. Die Menge des pro Zeiteinheit durchströmenden Druckmediums wird nachfolgend als Druckmediumstrom bezeichnet. Bei konstanter Position des Steuerschiebers hängt der Druckmediumstrom ab von einem Druckunterschied zwischen den Drücken in den beiden Arbeitsräumen.

Die EP-A1-0 285 909 und die EP-A1-0 288 736 zeigen einen Zylinder mit einem Steuerschieber, der so gestaltet ist, daß die auf den Steuerschieber wirkenden Strömungskräfte zwar klein aber trotzdem noch vorhanden sind. Trotz dieser geschickten Gestaltung des Steuerschiebers ergibt sich infolge des Druckmediumstroms eine auf den Steuerschieber in schließender Richtung wirkende Strömungskraft. Dies hat zur Folge, daß in Abhängigkeit der Größe des Druckmediumstroms, der Steuerschieber das Bestreben hat, die Drosselquerschnittsfläche etwas zu verkleinern. Dies kann bei den genannten Anmeldungen mit Hilfe eines einen Positionsgeber enthaltenden Regelkreises elektrisch kompensiert werden.

## Vorteile der Erfindung

Demgegenüber weist der mit den kennzeichnenden Merkmalen des Hauptanspruchs ausgestattete Zylinder den Vorteil auf, daß die auf den Steuerschieber wirkende Strömungskraft durch eine entgegensetzt auf den Steuerschieber wirkende Zusatzkraft vollständig oder doch mindestens teilweise kompensiert wird. Damit kann vorteilhafterweise die Steuerung des Steuerschiebers z. B. auch ohne einen elektrischen Regelkreis geschehen, bzw. der Regelkreis kann vorteilhafterweise einfacher gestaltet sein. Die Drosselquerschnittsfläche des Drosselquerschnitts ist, auch ohne größeren elektrischen Aufwand, unabhängig bzw. weitgehend unabhängig von der Größe des durchströmenden Druckmediumstromes.

Durch die in den Unteransprüchen aufgeführten Maßnahmen sind vorteilhafte Weiterbildungen und Verbesserungen des Zylinders möglich.

Die vorgesehene Ventilanordnung bietet den Vorteil, daß der Zylinder so ausgebildet werden kann, daß bei entgegengesetzter Strömungsrichtung des Druckmediumstromes durch den Drosselquerschnitt, die Erzeugung der Zusatzkraft unterbleibt.

## Zeichnung

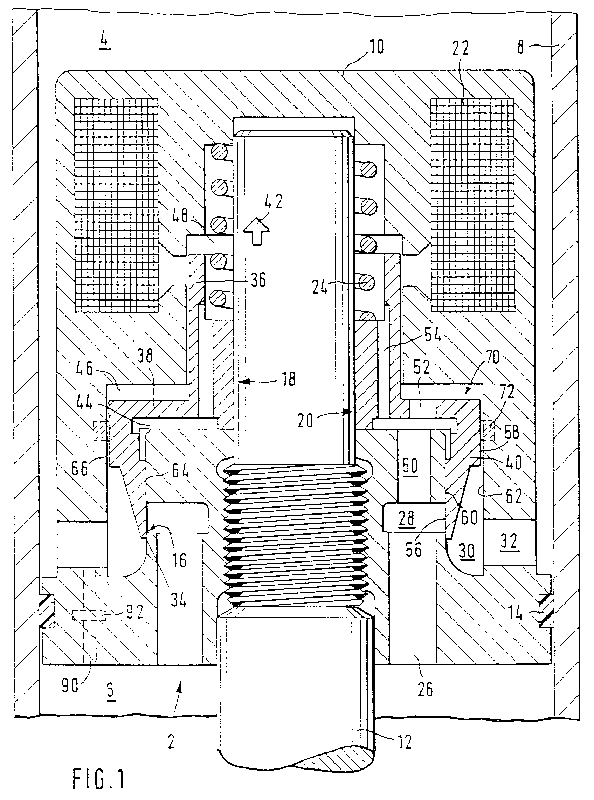

Ausführungsbeispiele der Erfindung sind in der Zeichnung vereinfacht dargestellt und in der nachfolgenden Beschreibung näher erläutert. Die Figuren 1 bis 4 zeigen je ein Ausführungsbeispiel des Zylinders.

## Beschreibung der Ausführungsbeispiele

Die Zeichnung zeigt den Zylinder zwecks Vereinfachung nur ausschnittsweise. Dargestellt ist nur der Bereich einer Strömungsverbindung 2 zwischen einem ersten Arbeitsraum 4 und einem zweiten Arbeitsraum 6. Die Arbeitsräume 4, 6 sind nur teilweise dargestellt und befinden sich innerhalb eines ebenfalls nur teilweise dargestellten Mantelrohres 8.

In dem dargestellten Ausführungsbeispiel führt die Strömungsverbindung 2 durch einen Kolben 10. Die Strömungsverbindung 2 kann aber auch an jeder anderen Stelle im Bereich des Zylinders vorgesehen sein. In dem dargestellten Ausführungsbeispiel befinden sich beide Arbeitsräume 4, 6 innerhalb des Mantelrohres 8. Es ist aber auch möglich, daß mindestens einer der beiden Arbeitsräume 4, 6 sich außerhalb des Mantelrohres 8 befindet. Mindestens einer der Arbeitsräume 4, 6 kann z. B. ein Ausgleichsraum sein. Der Ausgleichsraum kann z. B. das Mantelrohr 8 umgeben oder als separater Speicher ausgebildet sein.

Die Arbeitsräume 4, 6 enthalten ein Druckmedium. Das Druckmedium kann z. B. flüssig oder gasförmig sein. Es ist auch möglich, daß mindestens einer der Arbeitsräume 4, 6 nur teilweise mit dem z. B. flüssigen Druckmedium gefüllt sind und der Rest des Arbeitsraumes ein Gas enthält.

Der Kolben 10 ist an einer Kolbenstange 12 befestigt. Der Kolben 10 kann unter Zwischenlage einer Dichtung 14 an einer inneren Mantelfläche des Mantelrohres 8 axial gleiten.

Im Verlauf der Strömungsverbindung 2 befindet sich ein Drosselquerschnitt 16 mit einer Drosselquerschnittsfläche. Die Größe der Drosselquerschnittsfläche des Drosselquerschnitts 16 ist mit Hilfe einer Steuereinrichtung 18 veränderbar.

Die Steuereinrichtung 18 umfaßt einen Steuerschieber 20, einen Elektromagneten 22 und eine Feder 24.

Die Strömungsverbindung umfaßt axiale Öffnungen 26, einen Nuteinstich 28, einen Steuerraum 30 und radiale Öffnungen 32.

Bei dem in Figur 1 dargestellten Ausführungsbeispiel befindet sich der erste Arbeitsraum 4 oberhalb des Kolbens 10, und der zweite Arbeitsraum 6 befindet sich unterhalb des Kolbens 10. Ausgehend von dem zweiten Arbeitsraum 6 führt die Strömungsverbindung durch die axialen Öffnungen 26, durch den Nuteinstich 28, durch den Drosselquerschnitt 16, durch den Steuerraum 30 und schließlich durch die radialen Öffnungen 32 in den ersten Arbeitsraum 4.

Die Steuereinrichtung 18 mit dem Steuerschieber 20, dem Elektromagneten 22 und der Feder 24 kann gleich aufgebaut sein, wie es z. B. in der EP-A1-0 285 909 bzw. EP-A1-0 288 736 bzw. US 4 905 798 bzw. US 4 893 699 beschrieben ist. Um Wiederholungen zu vermeiden, wird auf das dort Geschriebene und bildlich Dargestellte verwiesen. Insbesondere kann der Steuerschieber 20, wie dort beschrieben und dargestellt, z. B. mit in Betätigungsrichtung sich erstreckenden Erhebungen und Vertiefungen versehen sein, sowie im Bereich seiner Schiebersteuerkante 34 schneidenartig ausgebildet sein.

Trotz dieser bekannten, an sich bereits vorteilhaften Ausgestaltung des Steuerschiebers, wirken, wenn Druckmedium durch den Drosselquerschnitt 16 strömt, Strömungskräfte in Betätigungsrichtung des Steuerschiebers 20 auf den Steuerschieber 20.

Der neue erfindungsgemäße Zylinder ist so ausgebildet daß eine Zusatzkraft die auf den Steuerschieber 20 wirkende Strömungskraft mindestens teilweise kompensiert.

Der Steuerschieber 20 umfaßt einen Anker 36, eine Ringscheibe 38 und ein Schieberteil 40. Im Anker 36 ist eine axiale Durchgangsbohrung vorgesehen, mittels derer der Steuerschieber 20 auf der Kolbenstange 12 axial gleitend verschiebbar ist. Der Anker 36 geht im Bereich der radial nach außen verlaufenden Ringscheibe 38 in das Schieberteil 40 über.

Bei zunehmender Bestromung des Elektromagneten 22 bewegt sich der Steuerschieber 20 gegen die Feder 24. Diese Richtung ist in der Zeichnung durch einen Pfeil 42 angedeutet.

Der Steuerschieber 20 befindet sich innerhalb des Kolbens 10. Bei Bewegung des Steuerschiebers 20 in Pfeilrichtung 42 vergrößert sich ein erster Raum 44 zwischen der Ringscheibe 38 und dem Kolben 10. Im gleichen Maße verkleinert sich ein zweiter Raum 46 auf der anderen Seite der Ringscheibe 38 und es verkleinert sich ein dritter Raum 48, in dem die Feder 24 sich befindet. Der erste Raum 44 ist über einen Durchlaß 50 mit dem Nuteinstich 28 und damit mit dem zweiten Arbeitsraum 6 verbunden. Ein in der Ringscheibe 38 des Steuerschiebers 20 vorgesehener Durchlaß 52 verbindet die beiden Räume 44, 46 miteinander. Ein weiterer Durchlaß 54 verbindet den dritten Raum 48 mit dem ersten Raum 44. Über die Durchlässe 50, 52, 54 sind die Räume 44, 46, 48 mit dem zweiten Arbeitraum 6 verbunden.

Im Zusammenspiel der Schiebersteuerkante 34 mit dem Nuteinstich 28 wird der Drosselquerschnitt 16 gebildet. Durch Verschieben des Steuerschiebers 20 parallel zum Pfeil 42 kann die Drosselquerschnittsfläche des Drosselquerschnitts 16 verändert werden.

Das Schieberteil 40 des Steuerschiebers 20 hat eine zylindrische innere Mantelfläche 56 und eine zylindrische äußere Mantelfläche 58. Der Kolben 10 besitzt eine zylindrische innere Mantelfläche 60 und eine zylindrische äußere Mantelfläche 62. Der Nuteinstich 28 unterbricht die innere Mantelfläche 60. Bei Betätigung des Steuerschiebers bewegt sich die innere Mantelfläche 56 des Steuerschiebers 20 entlang der inneren Mantelfläche 60 des Kolbens 10 und die äußere Mantelfläche 58 des Steuerschiebers 20 bewegt sich entlang der äußeren Mantelfläche 62 des Kolbens 10. Zwischen den inneren Mantelflächen 56, 60 wird ein innerer Spalt 64 gebildet. Zwischen den äußeren Mantelflächen 58, 62 bildet sich ein äußerer Spalt 66. An sich verbindet der innere Spalt 64 den ersten Raum 44 mit dem Nuteinstich 28 und mit dem Steuerraum 30. Der innere Spalt 64 ist jedoch so klein, daß über den Spalt 64 praktisch keine Verbindung zwischen dem ersten Raum 44 und dem Nuteinstich 28 und dem Steuerraum 30 besteht. Der äußere Spalt 66 verbindet an sich den zweiten Raum 46 mit dem Steuerraum 30. Der äußere Spalt 66 ist jedoch so dünn ausgebildet, daß der zweite Raum 46 als getrennt von dem Steuerraum 30 betrachtet werden kann.

Die äußeren Mantelflächen 58, 62 und damit der äußere Spalt 66 haben größere Durchmesser als die inneren Mäntelflächen 56, 60 bzw. der innere Spalt 64. Eine Querschnittsfläche zwischen den äußeren Mantelflächen 58, 62 und den inneren Mantelflächen 56, 60 bzw. zwischen dem äußeren Spalt 66 und dem inneren Spalt 64 bildet eine Wirkfläche 70.

Für den Fall, daß der Druck in dem ersten Arbeitsraum 4 größer ist als in dem zweiten Arbeitsraum 6, strömt das Druckmedium aus dem ersten Arbeitsraum 4 durch die Strömungsverbindung 2, d. h. durch die freie Drosselquerschnittsfläche des Drosselquerschnitts 16 in den zweiten Arbeitsraum 6. Der Druck des zuströmenden Druckmediums im Steuerraum 30 ist nahezu gleich wie der Druck des Druckmediums im ersten Arbeitsraum 4. Der Druck des vom Drosselquerschnitt 16 abströmenden Druckmediums im Nuteinstich 28 ist so gut wie gleich wie der der Druck in dem zweiten Arbeitsraum 6. Der Druck des zuströmenden Druckmediums in Steuerraum 30 ist größer als der Druck des abströmenden Druckmediums im Nuteinstich 28. Der Druckunterschied zwischen dem Druck des zuströmenden Druckmediums und dem Druck des abströmenden Druckmediums wird im Bereich des Drosselquerschnitts 16 abgebaut.

Bei Strömung des Druckmediums durch den Drosselquerschnitt 16 wirken hydrodynamische bzw. hydrostatische Strömungskräfte auf den Steuerschieber 20. Eine aus den Strömungskräften sich ergebende resultierende Strömungskraft wirkt bei dem dargestellten Ausführungsbeispiel auf den Steuerschieber 20 entgegen Pfeilrichtung 42, d. h. in den Drosselquerschnitt 16 schließende Richtung. Der höhere Druck in dem Steuerraum 30 wirkt auf die Wirkfläche 70 in Richtung des Pfeiles 42. Der niedrigere Druck des abströmenden Druckmediums wirkt in dem zweiten Raum 46 auf die Wirkfläche 70 des Steuerschiebers 20 entgegen Pfeil 42. Da der Druck in dem Steuerraum 30 größer ist als der Druck in dem zweiten Raum 46, gibt sich hieraus eine resultierende Zusatzkraft auf den Steuerschieber 20 in Richtung des Pfeiles 42. Diese resultierende Zusatzkraft ist der auf den Steuerschieber 20 wirkenden resultierenden Strömungskraft entgegengerichtet und kann damit die resultierende Strömungskraft mindestens teilweise kompensieren. Durch geeignete Wahl der Durchmesser der Mantelflächen 56, 58, 60, 62, d. h. durch geeignete Dimensionierung der Wirkfläche 70, kann die Größe der Zusatzkraft je nach Bedarf gewählt werden.

Mit zunehmendem Druckunterschied zwischen den Drücken in den Arbeitsräumen 4, 6 bzw. in dem Steuerraum 34 und in dem Nuteinstich 28 und gleicher Drosselquerschnittsfläche steigt der Druckmediumstrom durch den Drosselquerschnitt 16. Dabei steigt aber auch die auf den Steuerschieber 20 wirkende Strömungskraft. Mit steigendem Druckunterschied steigt aber auch die ebenfalls auf den Steuerschieber 20 wirkende Zusatzkraft. Da die Zusatzkraft der Strömungskraft entgegengerichtet ist, können sich die beiden Kräfte gegenseitig weitgehend aufheben und zwar weitgehend unabhängig von dem Druckunterschied zwischen den beiden Arbeitsräumen 4, 6 bzw. weitgehend unabhängig von der Größe des Druckmediumstromes.

Um ein Klemmen zwischen dem Steuerschieber 20 und dem Kolben 10 auszuschließen, ist es zweckmäßig, den äußeren Spalt 66 nicht zu klein auszuführen. Um eine ausreichende Trennung des zweiten Raumes 46 gegenüber dem Steuerraum 30 zu erreichen, kann der äußere Spalt 66 ggf. noch zusätzlich mit Hilfe einer umlaufenden, elastischen Dichtung 72 abgedichtet werden. Die Dichtung 72 ist nicht unbedingt notwendig und deshalb in der Figur 1 gestrichelt dargestellt. Auch der innere Spalt 64 kann bei Bedarf mit Hilfe einer nicht dargestellten zusätzlichen Dichtung abgedichtet werden.

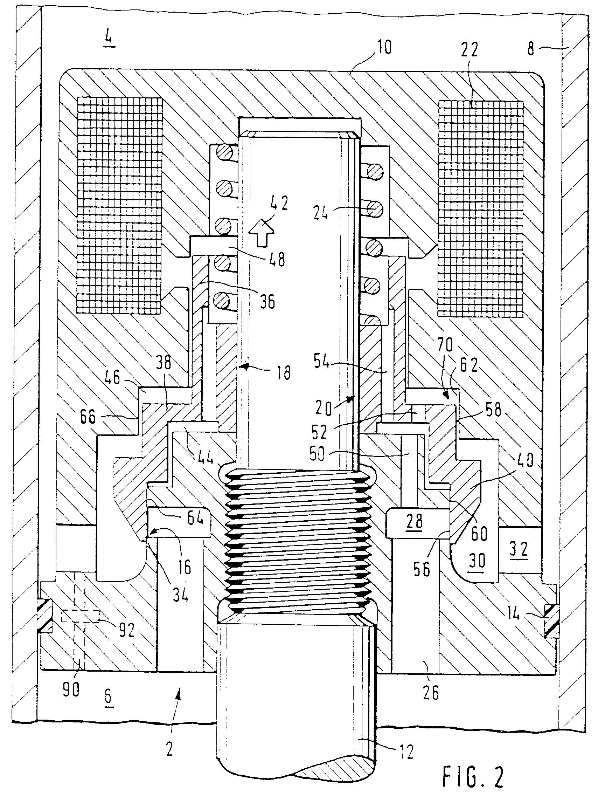

Die Figur 2 zeigt ein zweites Ausführungsbeispiel. In allen Figuren sind gleiche oder gleichwirkende Teile mit denselben Bezugszeichen versehen. Das zweite Ausführungsbeispiel sowie die nachfolgenden Ausführungsbeispiele sind weitgehend gleich aufgebaut wie das erste Ausführungsbeispiel, bis auf die nachfolgend im wesentlichen angegebenen Abweichungen.

In Figur 2 ist das Schieberteil 40 des Steuerschiebers 20 gewinkelt ausgeführt. Weitere Einzelheiten für die Ausbildung des Steuerschiebers 20 ergeben sich aus der Zeichnung. Damit ist es möglich, den Unterschied zwischen den Durchmessern des äußeren Spaltes 66 und des inneren Spaltes 64 ziemlich klein zu machen, ohne das Schieberteil 40 zu dünn ausführen zu müssen. Damit erreicht man, daß die Wirkfläche 70 ziemlich klein ist, ohne daß man Festigkeitsprobleme beim Schieberteil 40 des Steuerschiebers 20 bekommt.

In Figur 3 ist das dritte Ausführungsbeispiel dargestellt.

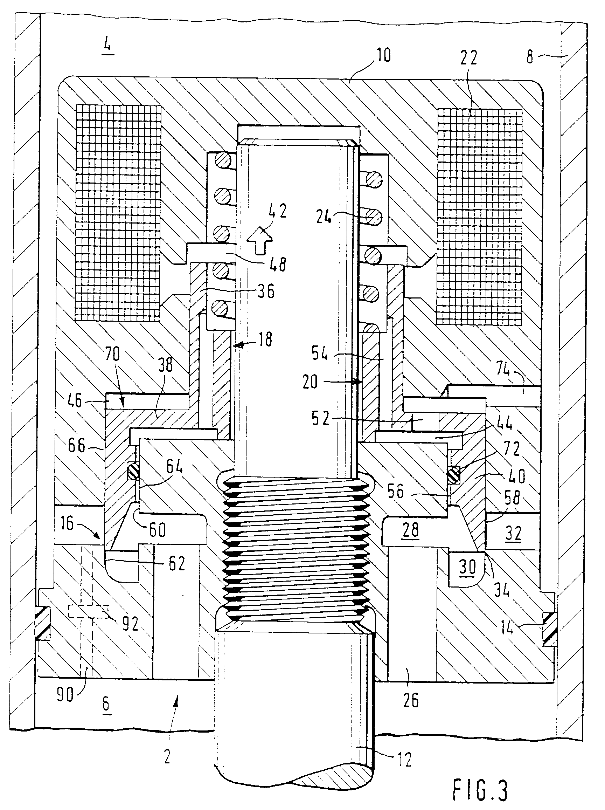

In den Figuren 1 und 2 wird der Drosselquerschnitt 16 im Zusammenspiel der inneren Mantelfläche 56 des Steuerschiebers 20 und der inneren Mantelfläche 60 des Kolbens 10 gebildet. Bei dem in Figur 3 dargestellten dritten Ausführungsbeispiel wird der Drosselquerschnitt im Zusammenspiel des Steuerschiebers 20 mit dem Kolben 10 im Bereich der äußeren Mantelflächen 58, 62 gebildet.

Bei dem in Figur 3 dargestellten Ausführungsbeispiel entfällt der Durchlaß 50. Stattdessen ist ein Durchlaß 74 vorgesehen. Dadurch sind der erste Raum 44, der zweite Raum 46 und der dritte Raum 48 mit dem ersten Arbeitsraum 4 verbunden.

Das in Figur 3 dargestellte Ausführungsbeispiel hat die gleiche Funktionsweise, wenn das Druckmedium aus dem zweiten Arbeitsraum 6 in den ersten Arbeitsraum 4 strömt, wie es anhand des in Figur 1 dargestellten ersten Ausführungsbeispiels erläutert wurde, für den Fall, daß das Druckmedium aus dem ersten Arbeitsraum 4 in den zweiten Arbeitsraum 6 strömt.

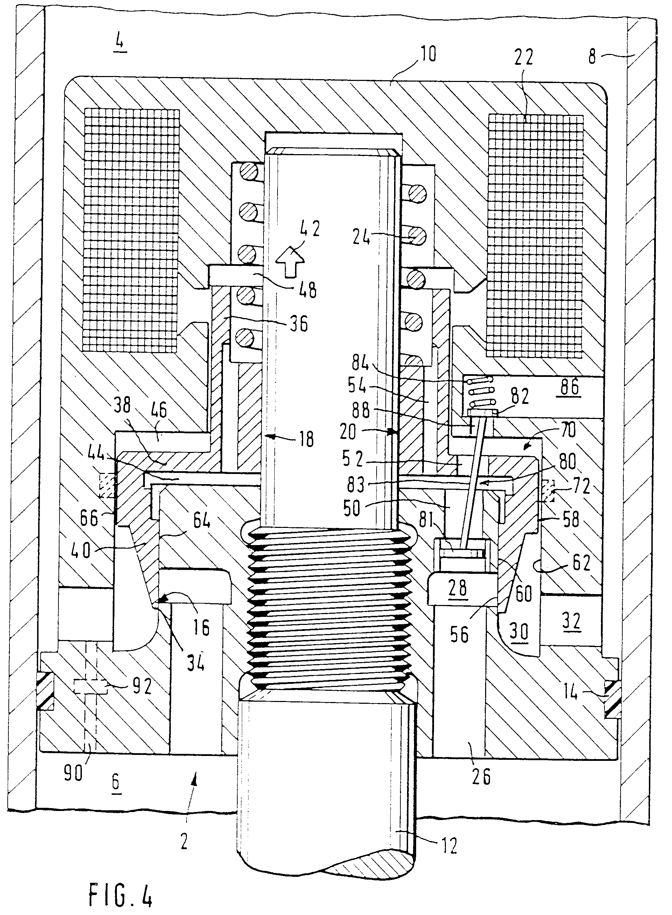

Die in den Figuren 1 bis 3 dargestellten Ausführungsbeispiele sind besonders geeignet, wenn das Druckmedium durch die Strömungsverbindung 2 nur in einer Richtung hindurchströmen muß. Dies kann z. B. bei sogenannten Zweirohrstoßdämpfern der Fall sein. Hier wird z. B. während des Einfahrhubs das Druckmedium durch die in diesem Fall im Kolben 10 vorgesehe Strömungsverbindung 2 geleitet und dort entsprechend gesteuert. Soll das Druckmedium mit wechselnder Strömungsrichtung durch die Strömungsverbindung 2 geleitet werden, so ist es besonders zweckmäßig, den Zylinder gemäß dem in Figur 4 dargestellten Ausführungsbeispiel auszubilden.

Die Figur 4 zeigt das vierte Ausführungsbeispiel.

Das vierte Ausführungsbeispiel ist weitgehend gleich aufgebaut wie das in Figur 1 dargestellte erste Ausführungsbeispiel, jedoch ist zusätzlich noch eine Ventilanordnung 80 vorgesehen. Die Ventilanordnung 80 umfaßt im wesentlichen beispielsweise einen ersten Ventilkörper 81, einen zweiten Ventilkörper 82, eine Verbindung 83 und eine Feder 84. In der Figur 4 ist beispielhaft eine besonders vorteilhafte Ausbildung der Ventilanordnung 80 dargestellt.

In dem Kolben 10 ist ein mit dem Arbeitsraum 4 verbundener Raum 86 vorgesehen. Je nach Stellung des zweiten Ventilkörpers 82 ist der zweite Raum 46 über einen Durchlaß 88 mit dem Raum 86 verbunden. Der zweite Ventilkörper 82 und die Feder 84 sind in dem Raum 86 angeordnet. Der erste Ventilkörper 81 ist in dem Durchlaß 50 vorgesehen. Je nach Stellung des ersten Ventilkörpers 81 ist der Durchlaß 50 geöffnet oder geschlossen. Die beiden Ventilkörper 81, 82 sind beispielsweise über die Verbindung 83 miteinander mechanisch verbunden. Dadurch ergibt sich zwischen den beiden Ventilkörpern 81, 82 eine Kopplung in der Weise, daß wenn der erste Ventilkörper 81 den Durchlaß 50 freigibt gleichzeitig der zweite Ventilkörper 82 den Durchlaß 88 versperrt. Umgekehrt, ist der Durchlaß 88 geöffnet, so ist gleichzeitig der Durchlaß 50 geschlossen. Die Feder 84 wirkt auf die Ventilkörper 81, 82, mit dem Bestreben, den Durchlaß 88 zu schließen und den Durchlaß 50 zu öffnen.

Ist der Druck in dem Arbeitsraum 4 größer als der Druck in dem zweiten Arbeitsraum 6, so haben die Räume 44, 46 Verbindung zum zweiten Arbeitsraum 6 und der Zylinder arbeitet wie weiter vorne anhand des ersten Ausführungsbeispiels erläutert und in Figur 1 dargestellt. Der Durchlaß 88 ist geschlossen und damit außer Funktion.

Ist der Druck des Druckmediums im zweiten Arbeitsraum 6 größer als der Druck des Druckmediums im ersten Arbeitsraum 4, so pflanzt sich zunächst der Druck des zweiten Arbeitsraums 6 ggf. fort bis zum Durchlaß 88. Damit ist der Druck im Durchlaß 88 größer als im Raum 86, weshalb der zweite Ventilkörper 82 entgegen der Kraft der relativ schwachen Feder 84 von seinem Ventilsitz abgehoben wird, wodurch der Durchlaß 88 sich öffnet. Dabei wird gleichzeitig zwangsweise der Durchlaß 50 geschlossen. Dadurch haben in diesem Fall die Räume 44, 46 Verbindung zum ersten Arbeitsraum 4. Auch der Steuerraum 30 und der dritte Raum 48 sind mit dem ersten Arbeitsraum 4 verbunden. Damit ist der Steuerschieber 20 von allen Seiten vom Druck des ersten Arbeitsraumes 4 umgeben, und er ist somit zumindest in Betätigungsrichtung statisch ausgeglichen. Das bedeutet, falls der Druck im zweiten Arbeitsraum 6 größer ist als im ersten Arbeitsraum 4, dann wirkt über die Wirkfläche 70 keine Zusatzkraft auf den Steuerschieber 20. Die Zusatzkraft tritt bei dem in Figur 4 dargestellten Ausführungsbeispiel nur dann auf, wenn das Druckmedium aus dem ersten Arbeitsraum 4 in den zweiten Arbeitsraum 6 strömt.

Um die Bewegungsfähigkeit des Steuerschiebers 20 nicht zu behindern, ist die Ventilanordnung 80 so ausgebildet, daß, wenn der erste Ventilkörper 81 den Durchlaß 50 freigibt, das Druckmedium in beiden Richtungen durch den Durchlaß 50 strömen kann. Ebenso ist es, wenn der Durchlaß 50 geschlossen aber dafür der Durchlaß 88 geöffnet ist. In diesem Fall kann das Druckmedium in beiden Richtungen durch den Durchlaß 88 strömen. Am einfachsten läßt sich dies erreichen, wenn man z. B., wie.in Figur 4 dargestellt, die beiden Ventilkörper 81, 82 mit Hilfe der Verbindung 83 miteinander koppelt.

Bei sogenannten Einrohrstoßdämpfern strömt das Druckmedium häufig in beiden Richtungen durch eine einzige Strömungsverbindung innerhalb des Kolbens. Deshalb ist die in Figur 4 beispielhaft dargestellte Ausführungsform des erfindungsgemäß ausgebildeten Zylinders besonders gut für sogenannte Einrohrstoßdämpfer geeignet.

Neben der Strömungsverbindung 2 können die Arbeitsräume 4, 6 des Zylinders mit einer weiteren Strömungsverbindung 90 oder mit mehreren weiteren Strömungsverbindungen verbunden sein. Da die weitere Strömungsverbindung 90 bei dem erfindungsgemäß ausgebildeten Zylinder nicht unbedingt erforderlich ist, ist die weitere Strömungsverbindung 90 in der Zeichnung gestrichelt dargestellt. Im Verlauf der weiteren Strömungsverbindung 90 kann eine weitere Steuereinrichtung 92 vorgesehen sein.

In der Zeichnung ist der Kolben 10 dargestellt, als würde er aus einem Stück bestehen. Um insbesondere die Steuereinrichtung 18 montieren zu können, kann der Fachmann den Kolben 10 in beliebiger Weise teilbar ausführen.

Das Mantelrohr 8 kann z. B. mit einem Aufbau oder mit einer Achse eines Fahrzeuges verbunden sein. Entsprechend ist die Kolbenstange 12 mit der Achse oder dem Aufbau des Fahrzeuges verbunden. Der erfindungsgemäße Zylinder kann damit z. B. ein Stoßdämpfer eines Fahrzeuges sein.

Die auf den Steuerschieber 20 resultierend wirkende Strömungskraft betätigt normalerweise den Steuerschieber 20 in schließender Richtung. Das z. B. in Figur 1 dargestellte Ausführungsbeispiel ist deshalb so gestaltet, daß zum Ausgleich der Strömungskraft die Zusatzkraft in öffnender Richtung, d. h. in Pfeilrichtung 42 wirkt. Bei dem z. B. in Figur 1 dargestellten Ausführungsbeispiel ist es aber auch möglich dieses so auszuführen, daß die Zusatzkraft in schließender Richtung wirkt, wenn das Druckmedium aus dem ersten Arbeitsraum 4 in den zweiten Arbeitsraum 6 strömt. Dies erreicht man z. B. dadurch, daß man den zweiten Raum 46 mit einem nicht bildlich dargestellten Durchlaß mit dem ersten Arbeitsraum 4 direkt verbindet und dafür den Durchlaß 52 verschließt. Da es dem Fachmann leicht möglich ist, diese Variante auszuführen, wird auf eine weitere bildliche Darstellung dieser Variante verzichtet.

**Patentansprüche**

1. Zylinder, insbesondere für Fahrzeuge, mit einem Kolben, einem Mantelrohr, zwei ein Druckmedium enthaltenden Arbeitsräumen und mit einer Strömungsverbindung zwischen den beiden Arbeitsräumen, wobei ein Drosselquerschnitt im Verlauf der Strömungsverbindung mit Hilfe eines Steuerschiebers steuerbar ist, dadurch gekennzeichnet, daß, zwecks Erzeugung einer Zusatzkraft, ein höherer Druck des am Drosselquerschnitt (16) zuströmenden Druckmediums eine quer zur Betätigungsrichtung des Steuerschiebers (20) verlaufende Wirkfläche (70) in Öffnungsrichtung (Pfeilrichtung 42) beaufschlagt und daß ein niedrigerer Druck des vom Drosselquerschnit (16) abströmenden Druckmediums die Wirkfläche (70) in Schließrichtung (entgegen Pfeil 42) beaufschlagt.

2. Zylinder nach Anspruch 1, dadurch gekennzeichnet, daß die Zusatzkraft aus einem die Wirkfläche (70) beaufschlagenden Druckunterschied zwischen dem höheren Druck und dem niedrigeren Druck entsteht.

3. Zylinder nach Anspruch 1 oder 2, dadurch gekennzeichnet, daß die Zusatzkraft mindestens teilweise auf den Steuerschieber (20) wirkende Strömungskräfte ausgleichen kann.

4. Zylinder nach einem der vorhergehenden Ansprüche, dadurch gekennzeichnet, daß die Zusatzkraft den Steuerschieber (20) in Öffnungsrichtung beaufschlagt.

5. Zylinder nach einem der vorhergehenden Ansprüche, dadurch gekennzeichnet, daß eine Ventilanordnung (80) vorgesehen ist zwecks Nichtausbildung der Zusatzkraft in Abhängigkeit einer Strömungsrichtung.

FIG.1

EP 0 492 107 A2

FIG. 2

8

FIG.3

FIG.4